# EUROPEAN PATENT APPLICATION

(11) **EP 4 641 947 A1**
(43) Date of publication of application: **29.10.2025**
(21) Application number: 23917164.8
(22) Date of filing: 10.11.2023
(51) Int. Cl.: H04B 10/079

(54) **SIGNAL TRANSMISSION APPARATUS, AND METHOD AND DEVICE FOR ADJUSTING AND TESTING SIGNAL TRANSMISSION APPARATUS**

(30) Priority: 18.01.2023 CN 202310201003; 21.04.2023 CN 202310464003
(71) Applicant: Huawei Technologies Co., Ltd., Shenzhen, Guangdong 518129 (CN)
(72) Inventor: ZENG, Jiahong, Shenzhen, Guangdong 518129 (CN); WU, Xiaozhu, Shenzhen, Guangdong 518129 (CN); GUO, Baobing, Shenzhen, Guangdong 518129 (CN); DAI, Shengjiang, Shenzhen, Guangdong 518129 (CN)
(74) Representative: Goddar, Heinz J.
(86) International application number: PCT/CN2023/131004
(87) International publication number: WO 2024/152696

(57) **Abstract**

This application discloses a signal transmission apparatus, and a signal transmission apparatus commissioning method and device, and pertains to the field of optical communication technologies. The apparatus includes: a service processing module, a signal processing module, and an optical module. The service processing module includes a first interface, the optical module includes a first channel, the signal processing module is separately communicatively connected to the first interface and the first channel, and the first interface is communicatively connected to the first channel. The first interface is configured to send an initial signal to the first channel. The first channel is configured to obtain a first modulated signal based on the initial signal, and transmit the first modulated signal. The signal processing module is configured to determine a parameter adjustment policy based on a transmission status corresponding to the first modulated signal, where the parameter adjustment policy indicates whether to adjust a matching parameter of the signal transmission apparatus. The signal transmission apparatus sends the initial signal, and automatically determines the parameter adjustment policy, to determine whether to adjust the matching parameter. A commissioning process is a fully automated operation, so that commissioning time of the signal transmission apparatus is effectively reduced, and efficiency is high.

## Description

This application claims priorities to Chinese Patent Application No. 202310201003.0, filed with the China National Intellectual Property Administration on January 18, 2023, and entitled "OPTICAL MODULE SYSTEM AND COMMISSIONING METHOD", and to Chinese Patent Application No. 202310464003.X, filed with the China National Intellectual Property Administration on April 21, 2023, and entitled "SIGNAL TRANSMISSION APPARATUS, AND SIGNAL TRANSMISSION APPARATUS COMMISSIONING METHOD AND DEVICE", both of which are incorporated herein by reference in their entireties.

### TECHNICAL FIELD

This application relates to the field of optical communication technologies, and in particular, to a signal transmission apparatus, and a signal transmission apparatus commissioning method and device.

### BACKGROUND

In the field of optical communication technologies, an optical signal may be transmitted by a signal transmission apparatus. The signal transmission apparatus includes a service processing module and an optical module, and a first interface included in the service processing module is communicatively connected to a first channel included in the optical module. Matching between the first interface and the first channel when the first interface is communicatively connected to the first channel affects quality of the optical signal transmitted by the signal transmission apparatus. Therefore, the signal transmission apparatus needs to be commissioned, so that in the signal transmission apparatus, the first interface included in the service processing module matches the first channel included in the optical module.

### SUMMARY

This application provides a signal transmission apparatus, and a signal transmission apparatus commissioning method and device, so that in the signal transmission apparatus, a first interface included in a service processing module matches a first channel included in an optical module. Technical solutions are as follows.

According to a first aspect, a signal transmission apparatus is provided. The signal transmission apparatus includes: a service processing module, a signal processing module, and an optical module. The service processing module includes a first interface, the optical module includes a first channel, the signal processing module is separately communicatively connected to the first interface and the first channel, and the first interface is communicatively connected to the first channel. The first interface is configured to send an initial signal to the first channel. The first channel is configured to obtain a first modulated signal based on the initial signal, and transmit the first modulated signal. The signal processing module is configured to determine a parameter adjustment policy based on a transmission status corresponding to the first modulated signal, where the parameter adjustment policy is used to adjust a matching parameter of the signal transmission apparatus, and the matching parameter is used to determine matching between the first interface and the first channel.

The signal transmission apparatus automatically determines the parameter adjustment policy based on sending of the initial signal, to determine whether the matching parameter of the signal transmission apparatus needs to be adjusted. Commissioning of the signal transmission apparatus is a fully automated operation, so that commissioning time of the signal transmission apparatus is effectively reduced, and commissioning efficiency is high.

In a possible implementation, the signal processing module is configured to obtain a transmission indicator corresponding to the first modulated signal, and determine the parameter adjustment policy based on the transmission indicator, where the transmission indicator is determined based on the transmission status corresponding to the first modulated signal. The parameter adjustment policy is determined by using an accurate transmission indicator, and accuracy of the obtained parameter adjustment policy is higher.

In a possible implementation, the service processing module further includes a second interface, the optical module further includes a second channel, the second interface is communicatively connected to the second channel, the signal processing module is separately communicatively connected to the second interface and the second channel, and the second channel is communicatively connected to the first channel. The first channel is configured to transmit the first modulated signal to the second channel. The second channel is configured to obtain a second modulated signal based on the first modulated signal, and transmit the second modulated signal to the second interface. The second interface is configured to obtain a signal feature of the second modulated signal, where the signal feature of the second modulated signal indicates the transmission status corresponding to the first modulated signal. The signal processing module is configured to obtain the transmission indicator that is obtained based on the signal feature of the second modulated signal. The transmission indicator is determined based on the signal feature of the second modulated signal, and the second modulated signal passes through the first channel in a transmitting direction and the second channel in a receiving direction in the optical module. Channel information carried in the second modulated signal is more comprehensive, and accuracy of the transmission indicator determined by using the second modulated signal is higher.

In a possible implementation, the first channel and the second channel are connected through an optical fiber. The connection between the first channel and the second channel may be implemented through the optical fiber, so that a connection manner is simple, and costs are low.

In a possible implementation, the optical module further includes an optical splitting module, and the optical splitting module is separately communicatively connected to the first channel and the second channel. The first channel is configured to transmit the first modulated signal to the optical splitting module. The optical splitting module is configured to transmit the first modulated signal to the second channel. An indirect connection between the first channel and the second channel may be implemented through the optical splitting module, so that a connection manner is simple. The connection between the first channel and the second channel may be implemented through the optical fiber, or may be implemented through the optical splitting module, so that flexibility is high.

In a possible implementation, the second interface is further configured to send the signal feature of the second modulated signal to the signal processing module. The signal processing module is configured to determine the transmission indicator based on the signal feature of the second modulated signal, an initial parameter of the second channel, and an initial parameter of the second interface. In addition to the signal feature of the second modulated signal, reference is further made to the initial parameter of the second channel and the initial parameter of the second interface, so that reference data in determining the transmission indicator is more comprehensive, and accuracy of the obtained transmission indicator is higher.

In a possible implementation, the first channel is communicatively connected to an indicator calculation module, and the indicator calculation module is communicatively connected to the signal processing module. The first channel is configured to transmit the first modulated signal to the indicator calculation module. The indicator calculation module is configured to determine the transmission indicator based on the received first modulated signal, and transmit the transmission indicator to the signal processing module. The signal processing module is configured to receive the transmission indicator sent by the indicator calculation module. Another module calculates the transmission indicator and shares calculation work of the signal processing module. In addition, a separate module is used to calculate the transmission indicator. This ensures smooth execution of calculating the transmission indicator.

In a possible implementation, the first channel is communicatively connected to a third channel included in a reference apparatus, and the third channel is communicatively connected to a reference processing module included in the reference apparatus. The first channel is configured to send the first modulated signal to the third channel. The third channel is configured to obtain a third modulated signal based on the first modulated signal, and send the third modulated signal to the reference processing module. The reference processing module is configured to determine the transmission indicator based on the third modulated signal, and send the transmission indicator to the signal processing module. The signal processing module is configured to receive the transmission indicator sent by the reference processing module. The reference apparatus is also a signal transmission apparatus configured to transmit a signal, and the transmission indicator may be calculated by another signal transmission apparatus, so that a calculation manner is simple. The transmission indicator may be obtained by the signal processing module through calculation, or may be obtained by the indicator calculation module through calculation, or may be obtained by the reference processing module through calculation, so that calculation manners are diversified, and universality is high.

In a possible implementation, the signal processing module is configured to determine, based on mismatching between the transmission indicator and a transmission protocol corresponding to the signal transmission apparatus, that the parameter adjustment policy indicates to adjust the matching parameter of the signal transmission apparatus. When the transmission indicator does not match the transmission protocol, it is determined that the parameter adjustment policy is that the matching parameter needs to be adjusted, and the matching parameter is adjusted in a timely manner.

In a possible implementation, the signal transmission apparatus further includes a central control module, the central control module is separately communicatively connected to the first interface and the first channel, and the central control module is communicatively connected to the signal processing module. The signal processing module is further configured to indicate to adjust the matching parameter of the signal transmission apparatus according to the parameter adjustment policy, and send the parameter adjustment policy to the central control module. The central control module is configured to adjust at least one of an interface parameter of the first interface and a drive parameter of the first channel according to the parameter adjustment policy. When the parameter adjustment policy indicates that adjustment needs to be performed, the central control module adjusts the matching parameter in a timely manner, so that a signal of the signal transmission apparatus after the matching parameter is adjusted complies with the transmission protocol, thereby improving compatibility of the signal transmission apparatus.

In a possible implementation, the signal processing module and the central control module are configured on a central control chip of the signal transmission apparatus. The signal processing module may be an independent module, or may be integrated with the central control module on a same chip, so that flexibility is high.

In a possible implementation, the signal processing module and the service processing module are configured on a cross chip of the signal transmission apparatus. In addition to being integrated on the central control chip, the signal processing module may also be integrated on the cross chip, so that a configuration manner of the signal processing module is not limited, and universality is high.

In a possible implementation, the initial signal is a signal sent based on a test optical eye pattern.

In a possible implementation, the optical module is a module inserted into the signal transmission apparatus. When the signal transmission apparatus is a pluggable signal transmission apparatus, commissioning of the matching parameter may also be performed. This is applicable to the pluggable signal transmission apparatus, and an application scope is wide.

In a possible implementation, the first interface includes a serializer deserializer-transmit (serializer deserializer-transmit, SERDES-T) interface.

In a possible implementation, the second interface includes a serializer deserializer-receive (serializer deserializer-receive, SERDES-R) interface.

According to a second aspect, a signal transmission apparatus commissioning method is provided. The method is applied to a signal transmission apparatus, the signal transmission apparatus includes a service processing module, a signal processing module, and an optical module, the service processing module includes a first interface, the optical module includes a first channel, the signal processing module is separately communicatively connected to the first interface and the first channel, and the first interface is communicatively connected to the first channel; and the method includes: sending an initial signal to the first channel through the first interface; obtaining a first modulated signal through the first channel based on the initial signal, and transmitting the first modulated signal; and determining a parameter adjustment policy through the signal processing module based on a transmission status corresponding to the first modulated signal, where the parameter adjustment policy is used to adjust a matching parameter of the signal transmission apparatus, and the matching parameter is used to determine matching between the first interface and the first channel.

In a possible implementation, determining the parameter adjustment policy through the signal processing module based on the transmission status corresponding to the first modulated signal includes: obtaining, through the signal processing module, a transmission indicator corresponding to the first modulated signal, and determining the parameter adjustment policy based on the transmission indicator, where the transmission indicator is determined based on the transmission status corresponding to the first modulated signal.

In a possible implementation, the service processing module further includes a second interface, the optical module further includes a second channel, the second interface is communicatively connected to the second channel, the signal processing module is separately communicatively connected to the second interface and the second channel, and the second channel is communicatively connected to the first channel; transmitting the first modulated signal includes: transmitting the first modulated signal to the second channel; and obtaining, through the signal processing module, the transmission indicator corresponding to the first modulated signal includes: obtaining a second modulated signal through the second channel based on the first modulated signal, and transmitting the second modulated signal to the second interface; obtaining a signal feature of the second modulated signal through the second interface, where the signal feature of the second modulated signal indicates the transmission status corresponding to the first modulated signal; and obtaining, through the signal processing module, the transmission indicator that is obtained based on the signal feature of the second modulated signal.

In a possible implementation, the first channel and the second channel are connected through an optical fiber.

In a possible implementation, the optical module further includes an optical splitting module, and the optical splitting module is separately communicatively connected to the first channel and the second channel; and transmitting the first modulated signal to the second channel includes: transmitting the first modulated signal to the optical splitting module; and transmitting the first modulated signal to the second channel through the optical splitting module.

In a possible implementation, after obtaining the signal feature of the second modulated signal through the second interface, the method further includes: sending the signal feature of the second modulated signal to the signal processing module; and obtaining, through the signal processing module, the transmission indicator that is obtained based on the signal feature of the second modulated signal includes: determining the transmission indicator through the signal processing module based on the signal feature of the second modulated signal, an initial parameter of the second channel, and an initial parameter of the second interface.

In a possible implementation, the first channel is communicatively connected to an indicator calculation module, and the indicator calculation module is communicatively connected to the signal processing module; transmitting the first modulated signal includes: transmitting the first modulated signal to the indicator calculation module, where the indicator calculation module is configured to determine the transmission indicator based on the received first modulated signal, and transmit the transmission indicator to the signal processing module; and obtaining, through the signal processing module, the transmission indicator corresponding to the first modulated signal includes: receiving, through the signal processing module, the transmission indicator sent by the indicator calculation module.

In a possible implementation, the first channel is communicatively connected to a third channel included in a reference apparatus, and the third channel is communicatively connected to a reference processing module included in the reference apparatus; transmitting the first modulated signal includes: sending the first modulated signal to the third channel, where the third channel is configured to obtain a third modulated signal based on the first modulated signal, and send the third modulated signal to the reference processing module, and the reference processing module is configured to determine the transmission indicator based on the third modulated signal, and send the transmission indicator to the signal processing module; and obtaining, through the signal processing module, the transmission indicator corresponding to the first modulated signal includes: receiving, through the signal processing module, the transmission indicator sent by the reference processing module.

In a possible implementation, determining the parameter adjustment policy based on the transmission indicator includes: determining, based on mismatching between the transmission indicator and a transmission protocol corresponding to the signal transmission apparatus, that the parameter adjustment policy indicates to adjust the matching parameter of the signal transmission apparatus.

In a possible implementation, the signal transmission apparatus further includes a central control module, the central control module is separately communicatively connected to the first interface and the first channel, and the central control module is communicatively connected to the signal processing module; and after determining the parameter adjustment policy based on the transmission status corresponding to the first modulated signal, the method further includes: indicating to adjust the matching parameter of the signal transmission apparatus through the signal processing module based on the parameter adjustment policy, and sending the parameter adjustment policy to the central control module; and adjusting at least one of an interface parameter of the first interface and a drive parameter of the first channel through the central control module according to the parameter adjustment policy.

In a possible implementation, the signal processing module and the central control module are configured on a central control chip of the signal transmission apparatus.

In a possible implementation, the signal processing module and the service processing module are configured on a cross chip of the signal transmission apparatus.

In a possible implementation, the initial signal is a signal sent based on a test optical eye pattern.

In a possible implementation, the optical module is a module inserted into the signal transmission apparatus.

In a possible implementation, the first interface includes an SERDES-T interface.

In a possible implementation, the second interface includes an SERDES-R interface.

According to a third aspect, a signal transmission apparatus commissioning device is provided. The device includes a processor, and the processor is configured to load and execute at least one instruction, so that the signal transmission apparatus commissioning device implements the signal transmission apparatus commissioning method according to any one of the second aspect or the possible implementations of the second aspect.

In a possible implementation, the device further includes a memory, the memory is coupled to the processor, and the memory is configured to store the at least one instruction.

According to a fourth aspect, a computer-readable storage medium is provided. The computer-readable storage medium stores at least one instruction, and the instruction is loaded and executed by a processor to implement the signal transmission apparatus commissioning method according to any one of the second aspect or the possible implementations of the second aspect.

According to a fifth aspect, a computer program (product) is provided. The computer program (product) includes a computer program/instructions, and the computer program/instructions are executed by a processor, so that a computer implements the signal transmission apparatus commissioning method according to any one of the second aspect or the possible implementations of the second aspect.

According to a sixth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal, and control the transceiver to send a signal. In addition, when the processor executes the instructions stored in the memory, the processor is enabled to perform the method according to any one of the second aspect or the possible implementations of the second aspect.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a seventh aspect, a chip is provided. The chip includes a processor, configured to invoke program instructions or code stored in a memory and run the instructions or code stored in the memory, so that a communication device on which the chip is installed performs the method according to the foregoing aspects.

According to an eighth aspect, another chip is provided. The chip includes an input interface, an output interface, a processor, and a memory. The input interface, the output interface, the processor, and the memory are connected through an internal connection path. The processor is configured to execute code in the memory. When the code is executed, the processor is configured to perform the method according to the foregoing aspects.

It should be understood that, for beneficial effect achieved by the technical solutions of the second aspect to the eighth aspect and the corresponding possible implementations of the technical solutions of the second aspect to the eighth aspect of this application, refer to the technical effect of the first aspect and the corresponding possible implementations of the first aspect. Details are not described herein again.

### BRIEF DESCRIPTION OF DRAWINGS

FIG. 1 is a diagram of a structure of a signal transmission apparatus according to an embodiment of this application;
FIG. 2 is a diagram of a structure of another signal transmission apparatus according to an embodiment of this application;
FIG. 3 is a diagram of a structure of still another signal transmission apparatus according to an embodiment of this application;
FIG. 4 is a diagram of a structure of yet another signal transmission apparatus according to an embodiment of this application;
FIG. 5 is a diagram of a structure of still yet another signal transmission apparatus according to an embodiment of this application;
FIG. 6 is a diagram of a connection of a signal transmission apparatus according to an embodiment of this application;
FIG. 7 is a diagram of a connection of another signal transmission apparatus according to an embodiment of this application;
FIG. 8 is a diagram of a connection of still another signal transmission apparatus according to an embodiment of this application;
FIG. 9 is a diagram of a structure of a reference apparatus according to an embodiment of this application;
FIG. 10 is a diagram of a structure of another signal transmission apparatus according to an embodiment of this application;
FIG. 11 is a flowchart of a signal transmission apparatus commissioning method according to an embodiment of this application;
FIG. 12A and FIG. 12B are a commissioning flowchart of a signal transmission apparatus according to an embodiment of this application;
FIG. 13 is a diagram of a structure of a network device according to an embodiment of this application; and
FIG. 14 is a diagram of a structure of another network device according to an embodiment of this application.

### DESCRIPTION OF EMBODIMENTS

Terms used in embodiments of this application are only used to explain specific embodiments of this application, but are not intended to limit this application. To make the objectives, technical solutions, and advantages of this application clearer, the following further describes implementations of this application in detail with reference to accompanying drawings.

In the field of optical communication technologies, an optical signal may be transmitted by a signal transmission apparatus. The signal transmission apparatus includes a service processing module and an optical module, the service processing module includes a first interface, and the optical module includes a first channel. Matching of the first interface and the first channel when the first interface and the first channel are connected affects quality of the optical signal transmitted by the signal transmission apparatus. For example, when the first interface is more matched to the first channel, quality of the optical signal transmitted by the first channel to the outside is better. In view of this, embodiments of this application provide a signal transmission apparatus, so that a matching parameter of the signal transmission apparatus can be commissioned, and in the signal transmission apparatus, a first interface included in a service processing module matches a first channel included in an optical module.

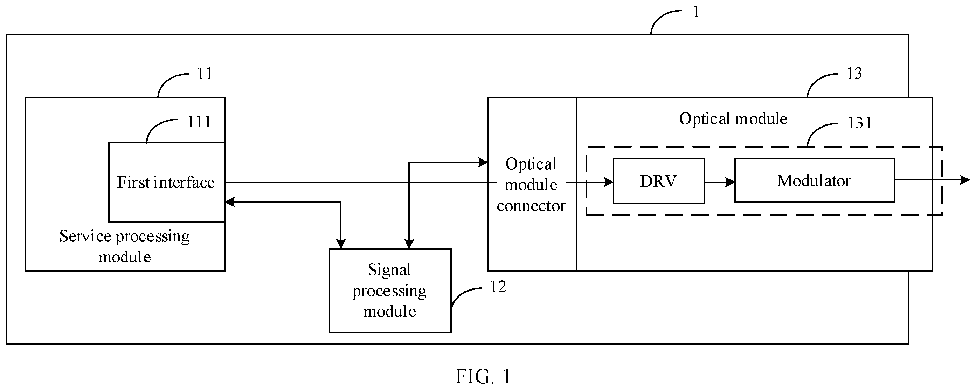

FIG. 1 is a diagram of a structure of a signal transmission apparatus according to an embodiment of this application. Refer to FIG. 1. The signal transmission apparatus 1 includes a service processing module 11, a signal processing module 12, and an optical module 13. The service processing module 11 includes a first interface 111, the optical module 13 includes a first channel 131, the signal processing module 12 is separately communicatively connected to the first interface 111 and the first channel 131, and the first interface 111 is communicatively connected to the first channel 131. The first interface 111 is configured to send an initial signal to the first channel 131. The first channel 131 is configured to obtain a first modulated signal based on the initial signal, and transmit the first modulated signal. The signal processing module 12 is configured to determine a parameter adjustment policy based on a transmission status corresponding to the first modulated signal, where the parameter adjustment policy is used to adjust a matching parameter of the signal transmission apparatus 1, and the matching parameter is used to determine matching between the first interface and the first channel. Because the signal transmission apparatus 1 includes the optical module 13, the signal transmission apparatus 1 may also be referred to as an optical module system in some cases, and the signal transmission apparatus 1 may also be represented by another term.

A manner of configuring the modules in the signal transmission apparatus 1 is not limited in this embodiment of this application. The service processing module 11, the signal processing module 12, and the optical module 13 may be fixed modules in the signal transmission apparatus 1. For example, the service processing module 11, the signal processing module 12, and the optical module 13 are fixed on a device board of the signal transmission apparatus 1 in a welding manner. Alternatively, the service processing module 11, the signal processing module 12, and the optical module 13 are movable modules of the signal transmission apparatus 1. In a possible implementation, the optical module 13 is a module inserted into the signal transmission apparatus 1, that is, the service processing module 11 and the signal processing module 12 are configured on the device board of the signal transmission apparatus 1. The optical module 13 is inserted into the device board, and the signal transmission apparatus 1 including the service processing module 11, the signal processing module 12, and the optical module 13 is obtained by using an insertion operation. In this case, the signal transmission apparatus 1 may be referred to as a pluggable optical module system. The signal transmission apparatus 1 is, for example, a high-performance linear (linear) pluggable optical module system. The pluggable optical module system is applied to short-distance optical interconnection, and a short distance is a distance less than 2 km or 10 km. The signal transmission apparatus 1 may also be a pluggable optical module system manufactured by another manufacturer.

Optionally, in a plug-in process of the optical module 13 shown in FIG. 1, an optical module connector and a connector of the device board may be fully mated (mating), that is, a distance between the optical module connector and the connector of the device board is 0. The optical module connector and the connector of the device board may not be fully mated, that is, there is a distance between the optical module connector and the connector of the device board, but the distance is not greater than an allowed mating gap (demating). The allowed mating gap may be set based on experience.

Regardless of the manner in which the modules included in the signal transmission apparatus 1 are configured in the signal transmission apparatus 1, the service processing module 11, the signal processing module 12, and the optical module 13 all have the connection relationship shown in FIG. 1. In a possible case, the service processing module 11, the signal processing module 12, and the optical module 13 may implement the connection relationship shown in FIG. 1 by connecting a connection line at an interface. Alternatively, the connection may be implemented based on a built-in connection line of the signal transmission apparatus 1. For example, the service processing module 11, the signal processing module 12, and the optical module 13 are configured on the device board of the signal transmission apparatus 1, and the electrical connection shown in FIG. 1 is implemented through a trace of the device board.

In a possible case, the modules in the signal transmission apparatus 1 further include connection assemblies, and the connection assemblies of the modules in the signal transmission apparatus 1 include but are not limited to at least one of a passive link and a printed circuit board (printed circuit board, PCB) trace. For example, in addition to the first interface 111, the service processing module 11 further includes a passive link connected to the first interface 111. In this case, the first interface 111 is communicatively connected to another module through the passive link. The optical module 13 also includes a connection assembly. For example, the first channel 131 in the optical module 13 is connected to the PCB trace, to be communicatively connected to the another module through the PCB trace. The passive link may be formed through a connection line such as a trace or a cable of a high-speed signal, and the high-speed signal is, for example, a signal greater than 50 megahertz (megahertz, MHz).

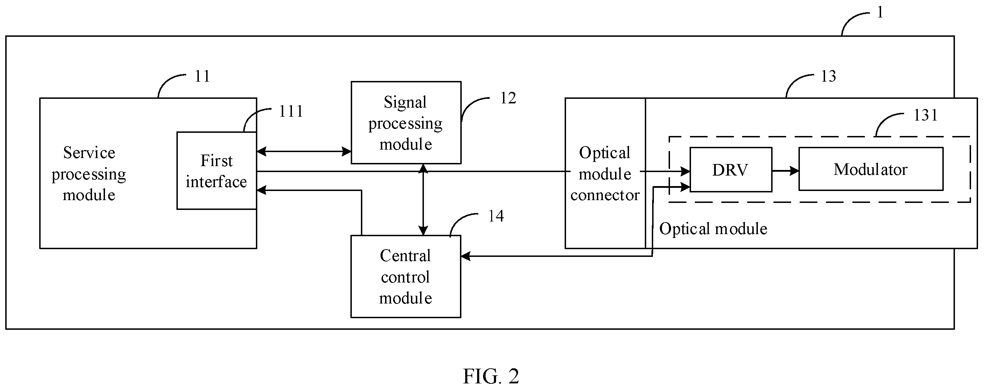

In addition, the connection relationship described in this embodiment of this application may be a direct connection between two modules, or may be an indirect connection implemented by another module. For example, as shown in FIG. 2, the signal transmission apparatus 1 further includes a central control module 14, the signal processing module 12 is communicatively connected to the central control module 14, and the central control module 14 is then communicatively connected to the first channel 131, to implement an indirect connection between the signal processing module 12 and the first channel 131. For descriptions of functions of the central control module 14, refer to the following related embodiments. Details are not described herein again.

FIG. 1 is intended to describe a structure of the signal transmission apparatus 1 by using an example, but is not intended to limit the signal transmission apparatus 1. The service processing module 11, the signal processing module 12, and the optical module 13 included in the signal transmission apparatus 1 may be rectangles shown in FIG. 1, or may be other geometric shapes or irregular shapes. Sizes of the service processing module 11, the signal processing module 12, and the optical module 13 may be different or may be the same.

An arrow of the connection line in FIG. 1 is used to describe a direction of signal transmission existing on the connection line by using an example, but is not used to limit the direction of signal transmission performed through the connection line. For example, an arrow of a connection line between the first interface 111 and the first channel 131 is a right arrow drawn based on a case in which the initial signal is sent from the first interface 111 to the first channel 131 in a commissioning process of the signal transmission apparatus 1. However, in some other cases, a signal may alternatively be sent from the first channel 131 to the first interface 111, and the sent signal may be implemented through the connection line shown in FIG. 1, that is, the arrow of the connection line between the first interface 111 and the first channel 131 in FIG. 1 may be adjusted from the right arrow to a bidirectional arrow.

The connection line in the accompanying drawings provided in embodiments of this application is intended to describe an information relationship between different modules, but is not intended to limit an actual physical trace. The signal sent by the first interface 111 to the first channel 131 may alternatively be transmitted through another connection line. For example, there is also another connection line between the first interface 111 and the first channel 131, and an arrow direction of the connection line is a left arrow. That is, the connection relationship between the first interface 111 and the first channel 131 is a bidirectional dual-line. In addition, a connection between different modules may be a straight line or a broken line with a bend shown in FIG. 1, or may be a connection line of another shape, for example, an irregular curve; or the connection between the different modules is implemented through a wireless connection.

Regardless of the structure of the signal transmission apparatus 1, the first interface 111 in the signal transmission apparatus 1 may send the initial signal to the first channel 131 after the signal transmission apparatus 1 is powered on and started, to commission the signal transmission apparatus 1. A manner of sending the initial signal by the first interface 111 is not limited in embodiments of this application, and transmission may be performed by using a point-to-point serial communication technology. For example, the first interface 111 is an SERDES-T interface, and the SERDES-T interface transmits the initial signal by using the point-to-point serial communication technology. In a process of transmitting the initial signal, a channel capacity is fully utilized, a quantity of required transmission channels and a quantity of component pins are reduced, and a transmission speed of the initial signal is improved, thereby reducing communication costs. Optionally, the first interface 111 may alternatively be another type of component configured to send a signal, and the manner of sending the initial signal by the first interface 111 may alternatively be a technology other than the point-to-point serial communication technology. In a possible case, the initial signal sent by the first interface 111 is a signal sent based on a test optical eye pattern, the test optical eye pattern is determined according to a transmission protocol, and a signal class of the transmitted initial signal is an electrical signal.

Regardless of the manner of sending the initial signal by the first interface 111 to the first channel 131, the first channel 131 may modulate the received initial signal, to obtain the first modulated signal. For example, as shown in FIG. 1 and FIG. 2, the first channel 131 includes a driver (driver, DRV) and a modulator (Modulator). One end of the DRV is communicatively connected to the first interface 111, and the other end of the DRV is communicatively connected to the modulator. The DRV is configured to amplify the initial signal, the amplified initial signal enters the modulator, and the modulator is configured to perform optical modulation on the amplified initial signal, to obtain the first modulated signal. In a possible case, a signal class of the first modulated signal on which optical modulation is performed is an optical signal, and transmission may be performed through an optical fiber. The optical fiber for transmitting the optical signal replaces a cable for transmitting an electrical signal, so that costs and a channel loss of signal transmission are effectively reduced.

Optionally, after the first channel 131 obtains the first modulated signal through modulation, the first modulated signal may be sent to a component that is communicatively connected to the first channel 131, so that the signal processing module 12 obtains a transmission indicator obtained based on the transmission status of the first modulated signal. When components connected to the first channel 131 are different, processes in which the signal processing module 12 obtains the transmission indicator are different. The following separately describes, through the different components connected to the first channel 131, the processes in which the signal processing module 12 obtains the transmission indicator.

Case 1: The first channel 131 is communicatively connected to a second channel of the signal transmission apparatus 1.

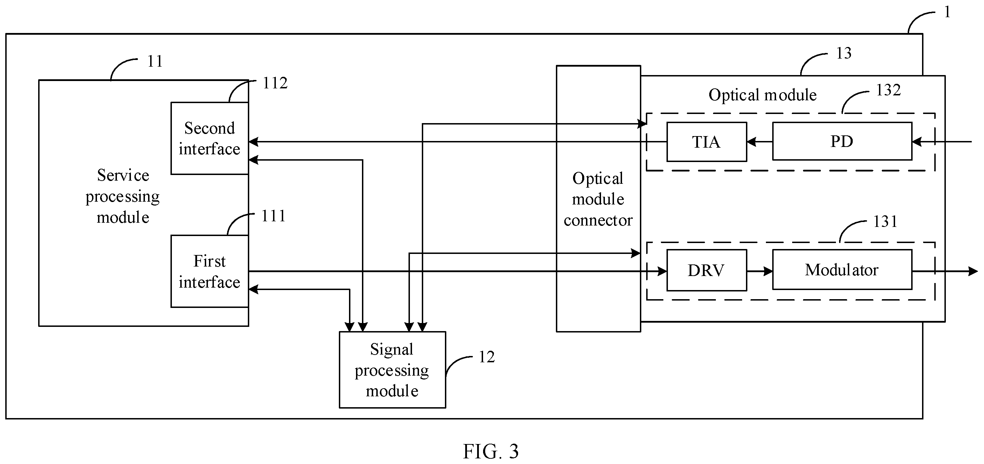

FIG. 3 is a diagram of a structure of a signal transmission apparatus according to an embodiment of this application. Refer to FIG. 3. The service processing module 11 further includes a second interface 112, the optical module 13 further includes a second channel 132, the second interface 112 is communicatively connected to the second channel 132, the signal processing module 12 is separately communicatively connected to the second interface 112 and the second channel 132, and the second channel 132 is communicatively connected to the first channel 131. In this case, the first channel 131 may transmit the first modulated signal to the second channel 132. When FIG. 3 shows a connection relationship between the second interface 112 and the signal processing module 12, a bidirectional single line is used as an example. In some cases, a plurality of connection lines, for example, bidirectional dual lines, may be used between the second interface 112 and the signal processing module 12.

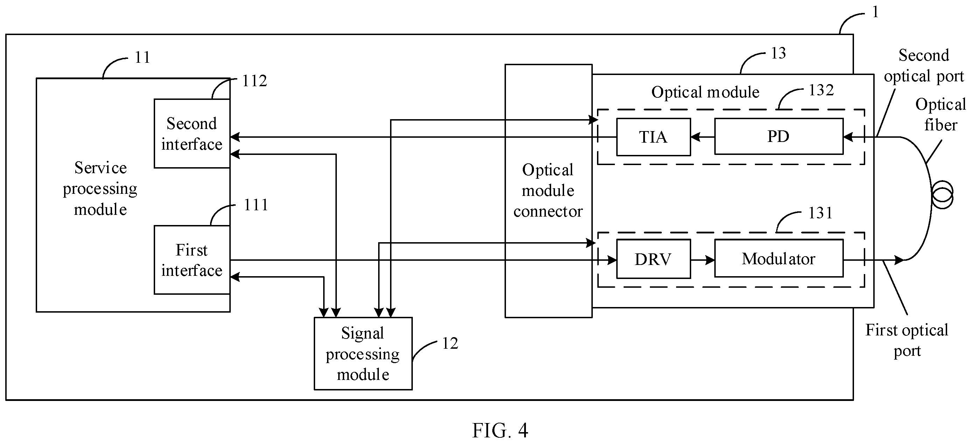

Optionally, the first channel 131 and the second channel 132 may be directly connected, and a connection manner is, for example, a connection through a short optical path, for example, an optical fiber, an optical switch, and a wavelength selective switch (wavelength selective switch, WSS). As shown in FIG. 4, the first channel 131 is communicatively connected to a first optical port, the second channel 132 is communicatively connected to a second optical port, and the first optical port and the second optical port are connected through an optical fiber. The first optical port and the second optical port are represented by arrows in FIG. 4.

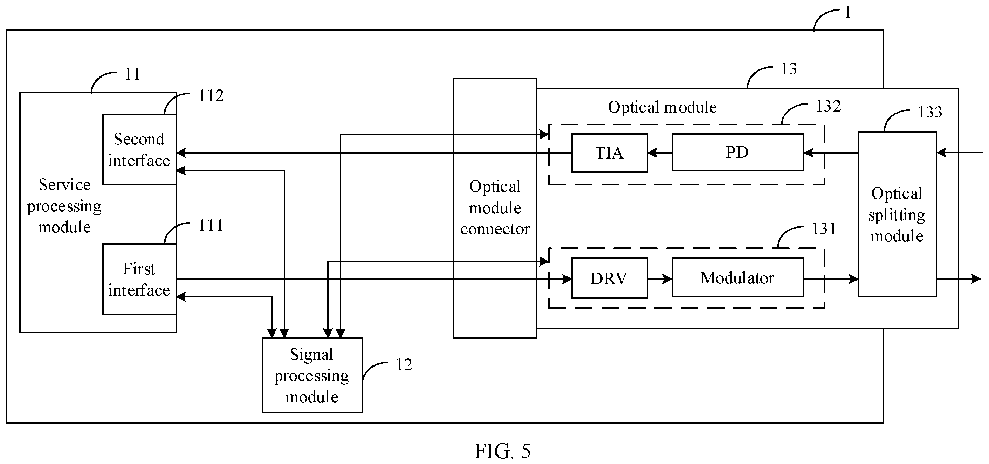

The first channel 131 and the second channel 132 may alternatively be indirectly connected. For example, as shown in FIG. 5, the optical module 13 further includes an optical splitting module 133, and the optical splitting module 133 is separately communicatively connected to the first channel 131 and the second channel 132. In this case, the process in which the first channel 131 sends the first modulated signal to the second channel 132 includes: The first channel 131 transmits the first modulated signal to the optical splitting module 133, and the optical splitting module 133 transmits the first modulated signal to the second channel 132. The optical splitting module 133 is configured to manage signal transmission. When the signal transmission apparatus 1 normally runs, that is, the signal transmission apparatus 1 is not at a commissioning stage, the optical splitting module 133 is configured to completely output, by using a command, the first modulated signal sent by the modulator to the second optical port connected to the second channel 132. For a location of the second optical port in FIG. 5, refer to a location of the second optical port in FIG. 4. When the signal transmission apparatus 1 is at the commissioning stage, the optical splitting module 133 is configured to loop all signals in the received first modulated signal back to the second channel 132 by using a command, or send a part of signals in the first modulated signal to the second channel 132.

Regardless of the manner of receiving the first modulated signal by the second channel 132, the received first modulated signal may be modulated, to obtain a second modulated signal. Optionally, the second channel 132 includes a transimpedance amplifier (transimpedance amplifier, TIA) and a photon detector (photon detector, PD). The PD is configured to perform photoelectric conversion on the received first modulated signal, and send the modulated first modulated signal to the TIA. Then, the TIA amplifies the modulated first modulated signal, to obtain the second modulated signal. Because the second channel 132 is communicatively connected to the second interface 112, after obtaining the second modulated signal through modulation, the second channel 132 may transmit the second modulated signal to the second interface 112. For a case in which the first modulated signal is the optical signal in the foregoing example, the PD may be configured to modulate the first modulated signal into an electrical signal.

Similar to the case of the first interface 111, the second interface 112 may be an SERDES-R interface, or may be another component configured to receive a signal. After receiving the second modulated signal, the second interface 112 may extract a signal feature of the second modulated signal, and the signal feature indicates the transmission status corresponding to the first modulated signal. Optionally, the second interface 112 obtains a first system response function and a second system response function, and determines a signal feature of the first modulated signal based on the first system response function and the second system response function. The first system response function indicates a change status after the initial signal is transmitted with a PCB signal through the second channel 132 in the optical module 13, and the second system response function indicates a change status after the first modulated signal is transmitted through the second interface 112 and a passive link corresponding to the second interface 112.

Optionally, the first system response function and the second system response function may be determined at a production commissioning stage before the signal transmission apparatus 1 is delivered from a factory, and the determining process is, for example, determined by a module compliance board (module compliance board, MCB) or a host compliance board (host compliance board, HCB). For example, a frequency domain of the first system response function is represented as H_{moduleRX}, and a frequency domain of the second system response function is represented as H_{boardRX}. The process in which the second interface 112 extracts the signal feature of the second modulated signal includes: dividing the received second modulated signal by (H_{moduleRX}×H_{boardRX}) in frequency domain, and determining an obtained quotient as the signal feature of the second modulated signal. In addition, the second interface 112 may also perform, in time domain by using the first system response function and the second system response function, deconvolution on the received second modulated signal to obtain the signal feature of the second modulated signal. This is not limited in this embodiment of this application.

In a possible case, based on the communication connection between the second interface 112 and the signal processing module 12, the second interface 112 may send the signal feature of the second modulated signal to the signal processing module 12. After receiving the signal feature of the second modulated signal, the signal processing module 12 may determine the transmission indicator based on the signal feature of the second modulated signal.

For example, the signal processing module 12 calculates a transmitter and dispersion eye closure for pulse amplitude modulation 4 (transmitter and dispersion eye closure for pulse amplitude modulation 4, TDECQ) based on the signal feature and a definition in a transmission protocol, and obtains the transmission indicator through calculation based on an average received optical power and a TIA transimpedance. The transmission indicator is, for example, an indicator, for example, an optical modulation amplitude (optical modulation amplitude, OMA) and an extinction ratio (extinction ratio, ER). The process of obtaining the average received optical power and the TIA transimpedance is similar to a process of obtaining an initial parameter of the first channel 131 and an initial parameter of the first interface 111 in Manner 2. For details, refer to related descriptions in Manner 2. Details are not described herein again.

The signal processing module 12 obtains the transmission indicator through calculation. The transmission indicator is determined based on the signal feature of the second modulated signal, and the signal feature of the second modulated signal can further determine the transmission status corresponding to the first modulated signal, and the transmission status of the first modulated signal is related to matching between the first channel 131 and the first interface 111. Therefore, it may be determined, based on the transmission indicator, whether matching between the first channel 131 and the first interface 111 needs to be adjusted; and when matching needs to be adjusted, an adjustment parameter is determined, to obtain the parameter adjustment policy.

Case 2: The first channel 131 is communicatively connected to an indicator calculation module.

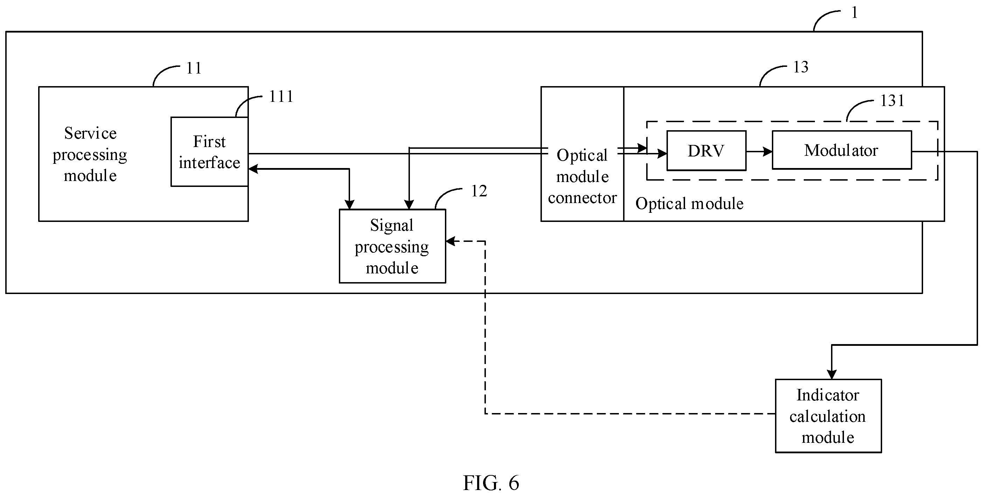

In Case 2, the first channel 131 is configured to transmit the first modulated signal to the indicator calculation module; and the indicator calculation module is configured to determine the transmission indicator based on the received first modulated signal. Refer to FIG. 6. On a basis of the communication connection between the indicator calculation module and the first channel 131, the indicator calculation module is further communicatively connected to the signal processing module 12. Therefore, the indicator calculation module may transmit, based on the communication connection between the indicator calculation module and the signal processing module 12, the transmission indicator corresponding to the first modulated signal to the signal processing module 12. The process in which the indicator calculation module calculates the transmission indicator is similar to the process of calculating the transmission indicator in Case 1. Refer to related descriptions. Details are not described herein again. In some cases, the indicator calculation module may also determine an adjustment parameter based on the transmission indicator.

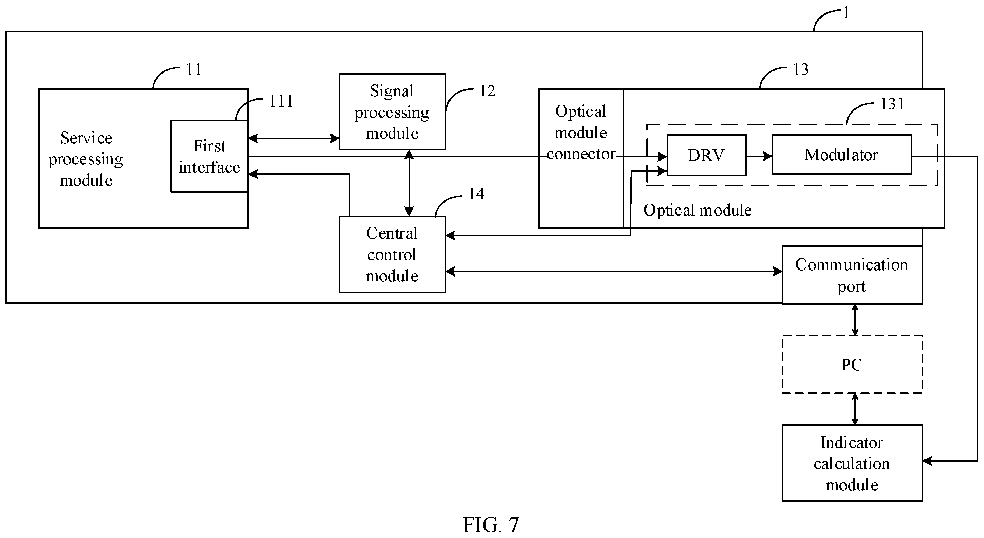

After calculating the transmission indicator, the indicator calculation module may send the transmission indicator to the signal processing module 12. A connection relationship between the indicator calculation module and the signal processing module 12 is not limited in this embodiment of this application, and may be an indirect connection shown in FIG. 7. The indicator calculation module is communicatively connected to a personal computer (personal computer, PC), the PC is communicatively connected to a communication port included in the signal transmission apparatus 1, the communication port is communicatively connected to the central control module 14, and the central control module 14 is communicatively connected to the signal processing module 12. The indicator calculation module sends the transmission indicator to the PC, the PC sends the transmission indicator to the communication port, the communication port sends the transmission indicator to the central control module 14, and then the central control module 14 sends the transmission indicator to the signal processing module 12. Optionally, as shown in FIG. 7, the indicator calculation module may be indirectly connected to the communication port through the PC, or the indicator calculation module may be directly connected to the communication port of the signal transmission apparatus 1. In this case, the process in which the indicator calculation module sends the transmission indicator to the signal processing module 12 is as follows: The indicator calculation module sends the transmission indicator to the communication port, the communication port sends the transmission indicator to the central control module 14, and the central control module 14 sends the transmission indicator to the signal processing module 12. In FIG. 7, a dashed box indicates that the PC is an optional module in the connection process of the indicator calculation module and the communication port. In addition, the indicator calculation module may alternatively send the transmission indicator to the central control module 14 through a network management system that is communicatively connected to the central control module 14.

Case 3: The first channel 131 is communicatively connected to a third channel included in a reference apparatus.

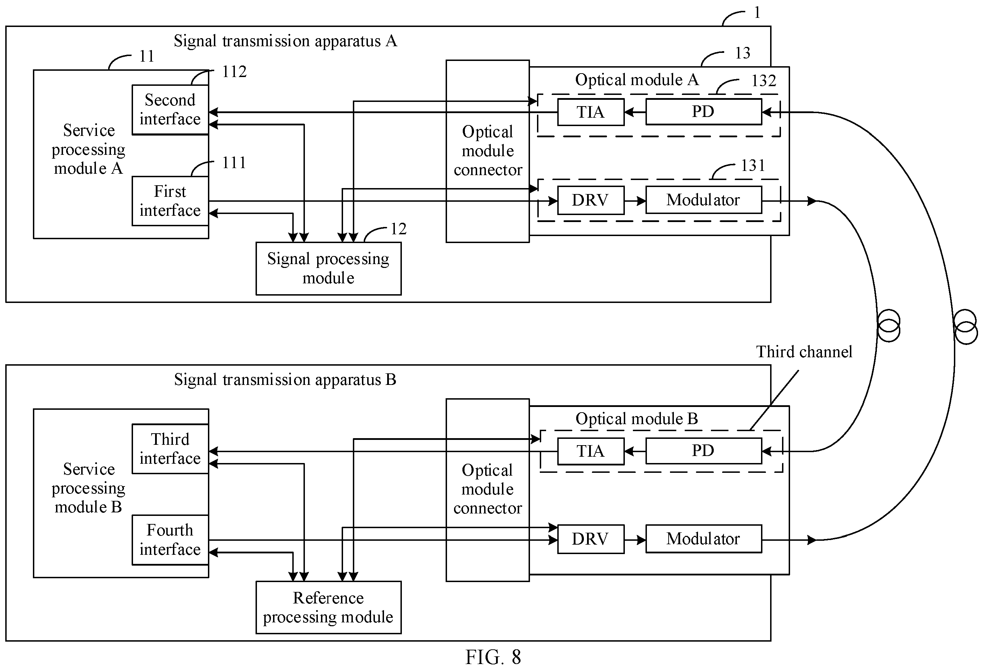

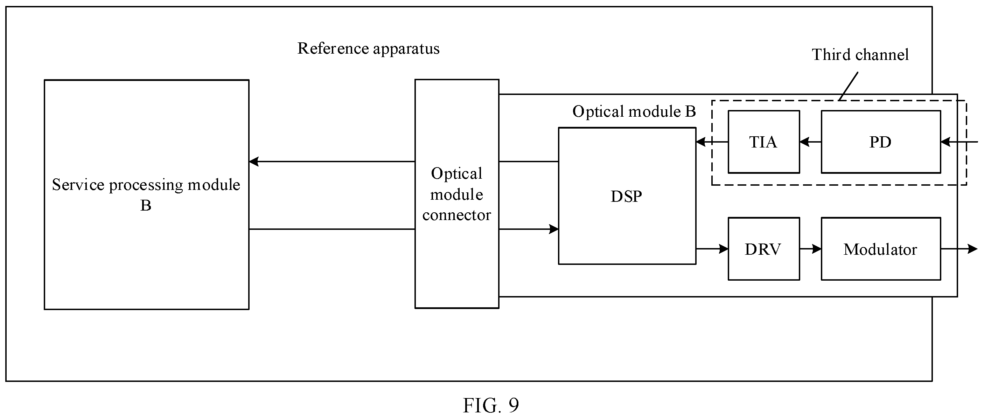

For example, the reference apparatus is also a signal transmission apparatus configured to transmit an optical signal. A structure of the reference apparatus is not limited in this embodiment of this application. The structure of the reference apparatus may be the same as the structure of the signal transmission apparatus 1, for example, as shown in FIG. 8. In FIG. 8, a signal transmission apparatus A is used to represent the signal transmission apparatus 1, and a signal transmission apparatus B is used to represent the reference apparatus. Refer to FIG. 8. A structure of the signal transmission apparatus B is the same as a structure of the signal transmission apparatus A, and includes a service processing module B, an optical module B, and a reference processing module. Optionally, the structure of the reference apparatus may alternatively be different from the structure of the signal transmission apparatus 1, and the reference apparatus may be an optical module system shown in FIG. 9.

The following describes differences between the two signal transmission apparatuses for transmitting the optical signal shown in FIG. 8 and FIG. 9. The signal transmission apparatus in FIG. 8 is a pluggable optical module system, and the signal transmission apparatus in FIG. 9 is a conventional optical module system. An optical module in the conventional optical module system is configured with a unit having a digital signal processing (digital signal processing, DSP) function, for example, a DSP unit in FIG. 9, or a clock data recovery (clock data recovery, CDR) unit. An optical module in the pluggable optical module system cancels a traditional CDR/DSP unit. A DSP function originally carried by the CDR/DSP unit is provided by a service processing module in the pluggable optical module system. The signal transmission apparatus 1 being a pluggable optical module system is used as an example. When sending the initial signal to the outside through the first interface 111, the service processing module 11 uses the DSP function to pre-compensate a reference signal sent through a transmit end link for various impairments, to obtain the initial signal, and then outputs, through the first interface 111, the initial signal obtained through pre-compensation. After receiving the second modulated signal, the second interface 112 performs equalization processing on the second modulated signal, and the internal DSP unit performs various compensation and decision operations on the second modulated signal, to recover a service signal. In the pluggable optical module system, the CDR/DSP unit is canceled, and the DSP function of the original optical module is moved out to the service processing module, so that system power consumption and optical module costs can be greatly reduced.

However, regardless of the structure of the reference apparatus, the reference apparatus includes the third channel communicatively connected to the first channel 131, to receive the first modulated signal sent by the first channel 131 to the third channel. Optionally, the third channel is configured to obtain a third modulated signal based on the first modulated signal. Refer to FIG. 8 and FIG. 9. The third channel includes a PD and a TIA. In this case, the process of modulating the first modulated signal through the third channel to obtain the third modulated signal is similar to the process of modulating the first modulated signal through the second channel 132 to obtain the second modulated signal. Refer to related descriptions in Case 1. Details are not described herein again.

In addition, the reference apparatus further includes a reference processing module, and the third channel included in the reference apparatus is communicatively connected to the reference processing module. After obtaining the third modulated signal through modulation, the third channel further sends the third modulated signal to the reference processing module. After receiving the third modulated signal, the reference processing module determines the transmission indicator based on the third modulated signal, and sends the transmission indicator to the signal processing module 12.

Optionally, a process in which the reference processing module determines the transmission indicator based on the third modulated signal is similar to the process in which the reference processing module determines the transmission indicator based on the second modulated signal in Case 1, and also includes: extracting a signal feature of the third modulated signal, and determining the transmission indicator based on the signal feature of the third modulated signal. For details, refer to related descriptions of determining the transmission indicator in Case 1. Details are not described herein again. The reference processing module, in the reference apparatus, that is configured to determine the transmission indicator may be an independent module shown in FIG. 8, or may be integrated with another module on a same chip. For a case in which a structure of the reference apparatus is shown in FIG. 9, the reference processing module may be a DSP unit in the reference apparatus.

Regardless of which component in the reference apparatus is the reference processing module, after determining the transmission indicator, the reference processing module may send the transmission indicator to the signal processing module 12 included in the signal transmission apparatus 1. Optionally, the reference processing module encapsulates the transmission indicator into data overhead information, a pilot tone signal, or the like for a signal sent by the reference apparatus. The data overhead information is used to manage and maintain the signal sent by the transmission apparatus, and the signal is a high-speed digital signal, and may be obtained through extraction from the service processing module in the reference apparatus. The pilot tone signal is a low-speed optical channel-associated signal generated at a transmit end for a main signal of a wavelength channel by using a frequency modulation or amplitude modulation technology, to carry information, and may be obtained through extraction from the optical module in the reference apparatus or the DSP unit integrated in the service processing module.

After obtaining the data overhead information or the pilot tone information, the reference apparatus uses the optical module B to send, based on a communication connection between the optical module B and the optical module 13, the data overhead information or the pilot tone signal to the optical module 13 included in the signal transmission apparatus 1, the optical module 13 transmits the received data overhead information or the received pilot tone signal to the signal processing module 12, and the signal processing module 12 extracts the data overhead information or the pilot tone signal, to obtain the transmission indicator. Optionally, the optical module B and the optical module 13 may be connected through an optical fiber.

In a possible case, after obtaining the transmission indicator corresponding to the first modulated signal, the signal processing module 12 may determine a parameter adjustment policy based on the transmission indicator. The parameter adjustment policy indicates whether to adjust the matching parameter of the signal transmission apparatus 1, and the matching parameter is used to determine matching between the first interface and the first channel. Optionally, the signal processing module 12 may determine the parameter adjustment policy based on a transmission protocol corresponding to the signal transmission apparatus 1, and determine, based on mismatching between the transmission indicator and the transmission protocol corresponding to the signal transmission apparatus 1, that the parameter adjustment policy indicates to adjust the matching parameter of the signal transmission apparatus 1; or determine, based on matching between the transmission indicator and the transmission protocol corresponding to the signal transmission apparatus 1, that the parameter adjustment policy indicates not to adjust the matching parameter of the signal transmission apparatus 1.

For example, the transmission protocol corresponding to the signal transmission apparatus 1 defines a transmission requirement that the signal transmission apparatus 1 needs to meet. The transmission protocol is, for example, a network protocol (IEEE 802.3). IEEE 802.3 defines an optical port standard that the signal transmission apparatus 1 needs to meet in the process of transmitting the optical signal. The signal processing module 12 may determine a matching result based on the transmission indicator and the optical port standard. When the transmission indicator does not meet the optical port standard, the signal processing module 12 determines that the transmission indicator does not match the transmission protocol corresponding to the signal transmission apparatus 1, then determines that the parameter adjustment policy needs to be adjusted, and obtains an optimization result of the matching parameter of the signal transmission apparatus 1 through calculation, to obtain the parameter adjustment policy.

The foregoing is a manner 1 in which the signal transmission apparatus 1 first obtains the transmission indicator, and then determines the parameter adjustment policy based on the transmission indicator. There is also a manner 2 in which the signal processing module 12 directly calculates the parameter adjustment policy.

In a possible case, the signal processing module 12 obtains an initial parameter of the first interface 111 and an initial parameter of the first channel 131, and obtains the parameter adjustment policy through calculation based on the initial parameter of the first interface 111 and the initial parameter of the first channel 131. A process in which the signal processing module 12 obtains the initial parameter of the first interface 111 and the initial parameter of the first channel 131 is not limited in this embodiment of this application. In a possible case, the signal transmission apparatus 1 includes a storage module, configured to store initial parameters of modules in the signal transmission apparatus 1, for example, the initial parameter of the first channel 131 and the initial parameter of the first interface 111. The signal processing module 12 may access storage space of the storage module, to obtain the initial parameter of the first channel 131 and the initial parameter of the first interface 111.

The signal processing module 12 may alternatively receive the initial parameter of the first channel 131 and the initial parameter of the first interface 111 that are sent by another module. For example, the optical module 13 further includes a module control chip, configured to adjust parameters of units in the optical module. The module control chip is communicatively connected to the storage module, and may read the initial parameters stored in the storage module. Then, the central control module 14 reads the initial parameters in the module control chip, and sends the obtained initial parameter of the first channel 131 and the obtained initial parameter of the first interface 111 to the signal processing module 12. After obtaining the initial parameter of the first channel 131 and the initial parameter of the first interface 111, the signal processing module 12 calculates a matching index between the first channel 131 and the first interface 111 based on the initial parameter of the first channel 131 and the initial parameter of the first interface 111, and then obtains the parameter adjustment policy through calculation based on the matching index.

Because there is a connection assembly in the connection relationship between the first channel 131 and the first interface 111, in the process of calculating the parameter adjustment policy, the signal processing module 12 may further refer to an initial parameter of the connection assembly. For example, the signal processing module 12 obtains the parameter adjustment policy of the first interface 111 and the optical module 13 through calculation based on the initial parameter of the first interface 111 and an initial parameter of the passive link of the first interface 111. A process in which the signal processing module 12 obtains the initial parameter of the passive link of the first interface 111 is similar to the process in which the signal processing module 12 obtains the initial parameter of the first interface 111. For details, refer to related descriptions. A process of calculating the parameter adjustment policy based on the initial parameter of the first interface 111 and the initial parameter of the passive link of the first interface 111 is similar to the process of calculating the parameter adjustment policy based on the initial parameters of the first interface 111 and the first channel 131 shown in the foregoing embodiment. For details, refer to related descriptions. Details are not described herein again. In addition, the foregoing manner 2 is intended to describe the process in which the signal processing module 12 calculates the parameter adjustment policy, but is not used to limit a parameter required for calculating the parameter adjustment policy. In some cases, in addition to the foregoing example of the initial parameter of the passive link of the first interface 111, the initial parameter of the connection assembly related to the process in which the signal processing module 12 calculates the parameter adjustment policy may also include a PCB trace parameter of the first channel 131.

Regardless of whether the signal processing module 12 obtains the parameter adjustment policy in the manner 1 or the manner 2, the signal processing module 12 may start to adjust the matching parameter of the signal transmission apparatus 1 after obtaining the parameter adjustment policy. In a possible implementation, as shown in FIG. 2, the signal transmission apparatus 1 includes the central control module 14, the central control module 14 is separately communicatively connected to the first interface 111 and the first channel 131, and the central control module 14 is communicatively connected to the signal processing module 12. Based on the connection relationship shown in FIG. 2, the signal processing module 12 is further configured to indicate to adjust the matching parameter of the signal transmission apparatus 1 according to the parameter adjustment policy, and send the parameter adjustment policy to the central control module 14. The central control module 14 is configured to adjust the matching parameter of the signal transmission apparatus 1 according to the parameter adjustment policy.

The matching parameter includes at least one of an interface parameter of the first interface 111 and a drive parameter of the first channel 131. In this case, the central control module 14 may adjust at least one of the interface parameter of the first interface 111 and the drive parameter of the first channel 131 when the parameter adjustment policy indicates to adjust the matching parameter of the signal transmission apparatus 1. When the first channel 131 includes the DRV and the modulator, the drive parameter of the first channel 131 is a parameter of the DRV. That the central control module 14 adjusts the interface parameter of the first interface 111 and the parameter of the DRV may be implemented by adjusting a parameter of an equalization filter in the first interface 111 and the DRV. The equalization filter is, for example, a feed forward equalization (feed forward equalization, FFE) used by the first interface 111, and a continuous-time linear equalizer (continuous-time linear equalizer, CTLE) used by the DRV. Optionally, in addition to the parameter of the equalization filter, the matching parameter may alternatively be another parameter, for example, a gain (gain) of the DRV.

After adjusting the matching parameter of the signal transmission apparatus 1, the signal transmission apparatus 1 may repeat the foregoing process of commissioning the signal transmission apparatus 1, send the initial signal through the first interface 111 after the parameter is adjusted, modulate the initial signal through the first channel 131 after the drive parameter is adjusted to obtain the first modulated signal, determine the transmission indicator based on the transmission status of the first modulated signal, determine the parameter adjustment policy based on the transmission indicator until the parameter adjustment policy indicates that the matching parameter of the signal transmission apparatus 1 does not need to be adjusted, and determine that the commissioning process of the signal transmission apparatus 1 ends. The commissioning process of the signal transmission apparatus 1 provided in this embodiment of this application may be applied to an application scenario of online commissioning before the signal transmission apparatus 1 runs. Therefore, after the commissioning process of the signal transmission apparatus 1 ends, the signal transmission apparatus 1 may be used to perform signal transmission.

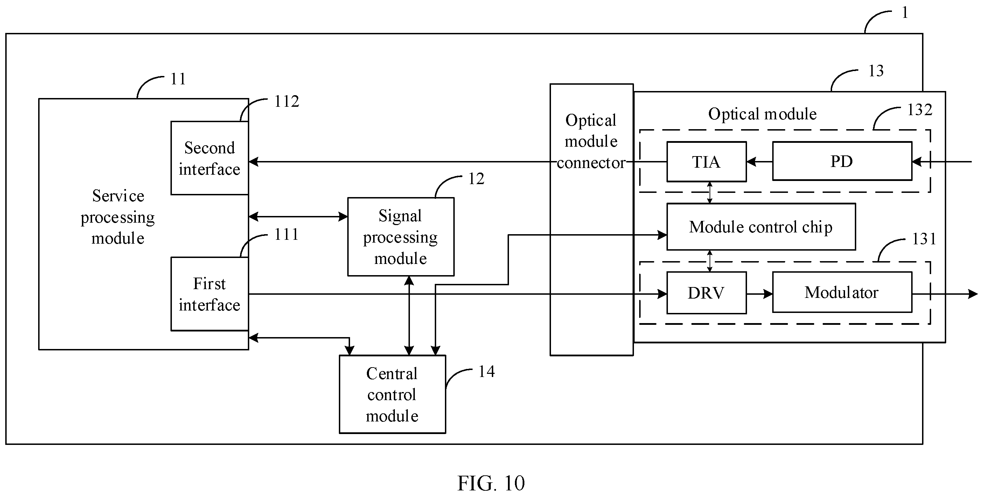

The accompanying drawings provided in embodiments of this application are intended to describe modules related to the commissioning process of the signal transmission apparatus 1 by using examples, but are not intended to limit the modules included in the signal transmission apparatus 1. In some cases, the signal transmission apparatus 1 may include more modules than those in FIG. 1 to FIG. 8. For example, as shown in FIG. 10, the optical module 13 included in the signal transmission apparatus 1 further includes the module control chip. The module control chip is communicatively connected to the TIA and the DRV, and also establishes a communication connection to the central control module 14. The module control chip is configured to: in a power-on process of the signal transmission apparatus 1, interact with the central control module 14 to implement configuration of the initial parameter of the optical module 13, receive a parameter adjustment result of the first channel 131, and adjust the drive parameter of the first channel 131 based on the parameter adjustment result. In addition, the modules included in the signal transmission apparatus 1 may have names in the foregoing embodiment, or may be represented by other names. For example, the service processing module 11 in the signal transmission apparatus 1 is named because the module may carry services including but not limited to data communication, information processing, and the like. In some other cases, the service processing module 11 may also be referred to as a cross module or another name.

In addition, the service processing module 11, the signal processing module 12, the optical module 13, the central control module 14, and the like included in the signal transmission apparatus 1 provided in this embodiment of this application are intended to distinguish between functional modules in the signal transmission apparatus 1, but are not intended to limit existence forms of the functional modules. The functional modules may exist independently. For example, the signal processing module 12 is independently configured on a signal processing chip in the signal transmission apparatus 1. In some cases, the functional modules may alternatively be integrated and configured together. For example, the central control module 14 and the signal processing module 12 are configured on a central control chip included in the signal transmission apparatus 1, or the service processing module 11 and the signal processing module 12 are configured on a cross chip included in the signal transmission apparatus 1. In some cases, all functional units of the signal processing module 12 may be integrated into one module, or a part of functional units may be integrated into one module. For example, a unit for calculating the transmission indicator in the signal processing module 12 and the service processing module 11 are configured on the cross chip, and a unit for determining the parameter adjustment policy in the signal processing module 12 and the central control module 14 are configured on the central control chip.

In addition, each type of module included in the signal transmission apparatus 1 provided in this embodiment of this application may be one module in the foregoing embodiment, or may be a plurality of modules in the foregoing embodiment. For example, the signal transmission apparatus 1 includes a plurality of optical modules, and there is an interconnection relationship between different optical modules. The signal processing module 12 may separately obtain transmission indicators corresponding to the different optical modules, and separately configure channel parameters on the different optical modules.

In conclusion, the signal transmission apparatus provided in this embodiment of this application automatically determines the parameter adjustment policy based on sending of the initial signal, to determine whether the matching parameter of the signal transmission apparatus needs to be adjusted, and manage commissioning of the signal transmission apparatus. Commissioning of the signal transmission apparatus is a fully automated operation, so that commissioning time of the signal transmission apparatus is reduced, and efficiency is high. Matching between the first channel and the first interface is adjusted, so that quality of the transmitted optical signal is effectively improved. The test optical eye pattern in the commissioning process is selected according to the transmission protocol, and complies with a protocol standard, so that optical port compatibility is improved.

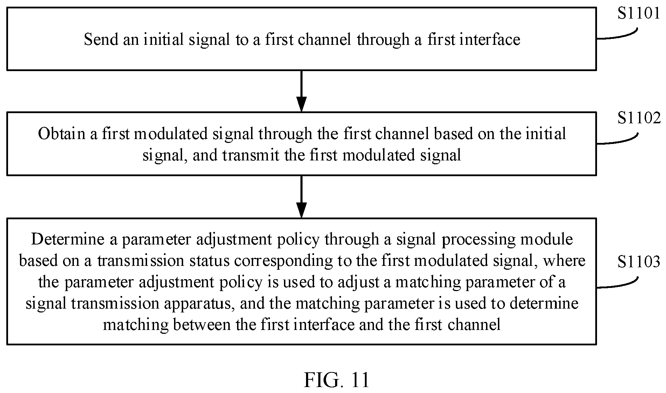

An embodiment of this application provides a signal transmission apparatus commissioning method. The method may be performed by a signal transmission apparatus, the signal transmission apparatus includes a service processing module, a signal processing module, and an optical module, the service processing module includes a first interface, the optical module includes a first channel, the signal processing module is separately communicatively connected to the first interface and the first channel, and the first interface is communicatively connected to the first channel. The signal transmission apparatus may be the signal transmission apparatus 1 shown in FIG. 1 to FIG. 8 and FIG. 10. A flowchart of the method is shown in FIG. 11, and includes S1101 to S1103.

S1101: Send an initial signal to the first channel through the first interface.

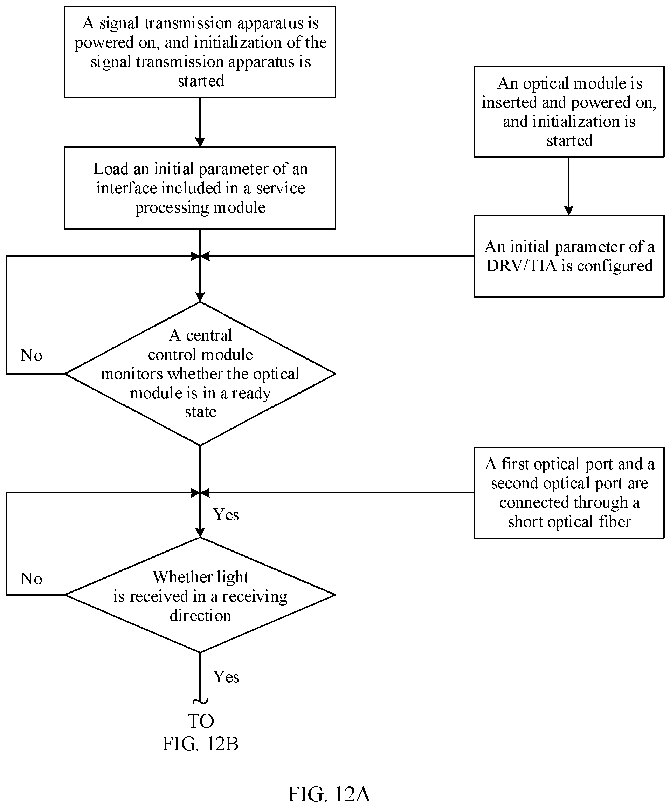

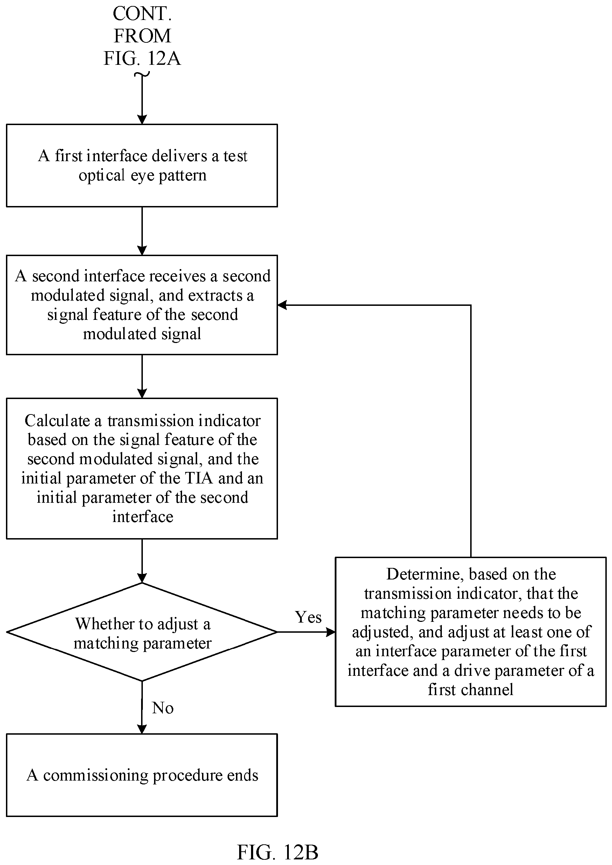

For example, after the signal transmission apparatus is powered on and started, the first interface starts to send the initial signal. Optionally, the startup manner may be that a board automatically starts, or may be manually controlled to be started by using an external command. FIG. 12A and FIG. 12B are a commissioning flowchart of the signal transmission apparatus according to an embodiment of this application. FIG. 12A and FIG. 12B show a previous step performed by the signal transmission apparatus before the first interface sends the initial signal. Refer to FIG. 12A and FIG. 12B. After the signal transmission apparatus is powered on, initialization of the signal transmission apparatus is started. The initialization process includes loading initial parameters of interfaces included in the service processing module, for example, loading initial parameters of the first interface and a second interface.

In a possible case, the signal transmission apparatus includes a storage module and a central control module. The storage module is configured to store initial parameters of modules in the signal transmission apparatus, and the central control module is configured to adjust the parameters of the modules. The central control module may read storage space of the storage module, to obtain the initial parameters of the interfaces included in the service processing module, and send the initial parameters of the interfaces to the service processing module, so that the service processing module loads the initial parameters of the included interfaces. In addition, the optical module included in the signal transmission apparatus also performs an initialization operation after being powered on. For example, when the optical module is a module inserted into the signal transmission apparatus, initialization of the optical module is started after the optical module is inserted and powered on. The initialization process of the optical module includes configuring initial parameters of a DRV and a TIA. The configuration process is similar to the process of loading the initial parameters of the interfaces included in the service processing module, and is that a module control chip included in the optical module accesses the storage module to obtain the initial parameter of the DRV and the initial parameter of the TIA.

After initialization of the signal transmission apparatus is completed, the central control module monitors whether the optical module is in a ready (ready) state. The ready state indicates whether initialization of the signal transmission apparatus is completed. The central control module may interact with the module control chip included in the optical module, to determine whether the optical module is in the ready state. If the optical module is not in the ready state, it indicates that initialization of the signal transmission apparatus is not completed, and the operation of initializing the signal transmission apparatus is repeated. If the optical module is in the ready state, it indicates that initialization of the signal transmission apparatus is completed, and a connection status of the signal transmission apparatus is detected. For example, a first optical port and a second optical port of the signal transmission apparatus are connected through a short optical fiber, the initial signal is sent through the first interface, and then it is detected whether an optical signal corresponding to the initial signal is received in a receiving direction of the signal transmission apparatus. The receiving direction is the second interface and a second channel of the signal transmission apparatus.

For a case in which no optical signal is received in the receiving direction of the signal transmission apparatus, it is determined that the connection status of the signal transmission apparatus is that the connection is unsuccessful, and the signal transmission apparatus adjusts a communication connection between the first optical port and the second optical port, repeatedly sends the initial signal, and continues to detect the connection status of the signal transmission apparatus. For a case in which the optical signal is received in the receiving direction of the signal transmission apparatus, it is determined that the connection status of the signal transmission apparatus is that the connection is successful, and matching between the first channel and the first interface in the signal transmission apparatus when they are connected may be further commissioned.

For example, on a basis that it is detected that commissioning of the signal transmission apparatus starts, the central control module delivers a test optical eye pattern (pattern) to the first interface, replaces a pattern of the first interface from an initial pattern with a pattern related to the test optical eye pattern, and the first interface sends the initial signal to the first channel based on the test optical eye pattern. The first interface includes an SERDES-T interface.

S1102: Obtain the first modulated signal through the first channel based on the initial signal, and transmit the first modulated signal.

For example, for a process in which the first channel modulates the initial signal, refer to the process in which the first channel 131 modulates the initial signal in the foregoing embodiment. Details are not described herein again. The process in which the first channel transmits the first modulated signal may include but is not limited to the following three manners.

Transmission manner 1: For a case in which the service processing module further includes the second interface, the optical module further includes the second channel, the second interface is communicatively connected to the second channel, the signal processing module is separately communicatively connected to the second interface and the second channel, and the second channel is communicatively connected to the first channel, the first modulated signal may be transmitted to the second channel through the first channel.

Optionally, when the first channel and the second channel may be connected through an optical fiber, the first channel directly sends the first modulated signal to the second channel. The first channel and the second channel may alternatively be indirectly connected. For example, the optical module further includes an optical splitting module, and the optical splitting module is separately communicatively connected to the first channel and the second channel. Therefore, the process in which the first channel transmits the first modulated signal to the second channel includes: transmitting the first modulated signal to the optical splitting module through the first channel, and transmitting the first modulated signal to the second channel through the optical splitting module.

Transmission manner 2: For a case in which the first channel is communicatively connected to an indicator calculation module, the first modulated signal may be transmitted to the indicator calculation module through the first channel.

For example, for descriptions of the indicator calculation module, refer to the descriptions of the indicator calculation module in the embodiment shown in FIG. 6. For descriptions of transmitting the first modulated signal to the indicator calculation module, refer to the descriptions of transmitting the first modulated signal to the indicator calculation module in the foregoing embodiment. Details are not described herein again.

Transmission manner 3: For a case in which the first channel is communicatively connected to a third channel included in a reference apparatus, and the third channel is communicatively connected to a reference processing module included in the reference apparatus, the first modulated signal may be sent to the third channel through the first channel.

For example, for descriptions of the reference apparatus, refer to the descriptions of the reference apparatus in the embodiment shown in FIG. 8. For a process of sending the first modulated signal to the third channel, refer to the process of sending the first modulated signal to the third channel in the foregoing embodiment. Details are not described herein again.

S1103: Determine the parameter adjustment policy through the signal processing module based on a transmission status corresponding to the first modulated signal, where the parameter adjustment policy is used to adjust a matching parameter of the signal transmission apparatus, and the matching parameter is used to determine matching between the first interface and the first channel.

Optionally, the process of determining the parameter adjustment policy includes: obtaining, through the signal processing module, a transmission indicator corresponding to the first modulated signal, and determining the parameter adjustment policy based on the transmission indicator, where the transmission indicator is determined based on the transmission status corresponding to the first modulated signal. For the three manners of transmitting the first modulated signal shown in S1102, processes in which the signal processing module obtains the transmission indicator are also different.

Obtaining manner 1: For the case of Transmission manner 1, a second modulated signal is obtained through the second channel based on the first modulated signal, and the second modulated signal is transmitted to the second interface; a signal feature of the second modulated signal is extracted through the second interface, and the signal feature of the second modulated signal indicates the transmission status corresponding to the first modulated signal; and the transmission indicator obtained based on the second modulated signal is obtained through the signal processing module.

Obtaining manner 1 is the case shown in FIG. 12A and FIG. 12B. Optionally, the process in which the second channel modulates the first modulated signal is similar to the process of modulating the first modulated signal in the embodiment shown in FIG. 4 or FIG. 5, and the process of transmitting the second modulated signal and extracting the signal feature of the second modulated signal is similar to the process of extracting the signal feature of the second modulated signal in the embodiment shown in FIG. 4 or FIG. 5. For details, refer to related descriptions. Details are not described herein again.

The process of obtaining the transmission indicator through the signal processing module is not limited in this embodiment of this application. For example, after extracting the signal feature of the second modulated signal, the second interface further sends the signal feature of the second modulated signal to the signal processing module, and then the signal processing module may determine the transmission indicator based on the signal feature of the second modulated signal, an initial parameter of the second channel, and the initial parameter of the second interface. For example, descriptions of the second interface are similar to the descriptions of the second interface 112 in the foregoing embodiment, and includes an SERDES-E interface. The process in which the signal processing module determines the transmission indicator is similar to the process of obtaining the transmission indicator in the embodiment shown in FIG. 4 or FIG. 5. The initial parameter, of the second channel, that is referenced in the determining process may be the initial parameter of the TIA. For detailed content, refer to related descriptions. Details are not described herein again.

Obtaining manner 2: For the case of Transmission manner 2, the transmission indicator sent by the indicator calculation module is received through the signal processing module. The indicator calculation module is configured to determine the transmission indicator based on the received first modulated signal, and transmit the transmission indicator to the signal processing module. The process in which the indicator calculation module determines the transmission indicator is similar to the process in which the indicator calculation module determines the transmission indicator in the embodiment shown in FIG. 6. The process in which the indicator calculation module sends the transmission indicator to the signal processing module is similar to the process in which the indicator calculation module sends the transmission indicator to the signal processing module 12 in the embodiment shown in FIG. 7. For details, refer to related descriptions in FIG. 6 and FIG. 7. Details are not described herein again.

Obtaining manner 3: For the case of Transmission manner 3, the transmission indicator sent by the reference processing module is received through the signal processing module. The reference processing module is communicatively connected to the third channel, the third channel is configured to obtain a third modulated signal based on the first modulated signal, and send the third modulated signal to the reference processing module, and the reference processing module is configured to determine the transmission indicator based on the third modulated signal, and send the transmission indicator to the signal processing module.

For example, the process in which the third channel modulates the first modulated signal is similar to the process in which the third channel modulates the first modulated signal in the embodiment shown in FIG. 8. The process in which the signal processing module determines the transmission indicator based on the third modulated signal is similar to the process in which the signal processing module determines the transmission indicator based on the third modulated signal in the embodiment shown in FIG. 8. The process in which the reference processing module sends the transmission indicator to the signal processing module is similar to the process in which the reference processing module sends the transmission indicator to the signal processing module 12 in the embodiment shown in FIG. 8. For details, refer to related descriptions in FIG. 8. Details are not described herein again.

Regardless of the manner in which the signal processing module obtains the transmission indicator, the parameter adjustment policy may be determined based on the transmission indicator. The determining manner includes but is not limited to: determining, based on mismatching between the transmission indicator and a transmission protocol corresponding to the signal transmission apparatus, that the parameter adjustment policy indicates to adjust the matching parameter of the signal transmission apparatus. Optionally, the process of determining the parameter adjustment policy through the signal processing module is similar to the process of determining the parameter adjustment policy through the signal processing module 12 in the foregoing embodiment. For details, refer to related descriptions. Details are not described herein again.

Optionally, in addition to determining the parameter adjustment policy based on the transmission indicator, the signal processing module may further obtain the parameter adjustment policy through calculation by using the initial parameter of the first interface 111 and the initial parameter of the first channel 131. For the determining process, refer to related descriptions in Manner 2 in the foregoing embodiment. Details are not described herein again.

In a possible case, as shown in FIG. 12A and FIG. 12B, the matching parameter of the signal transmission apparatus is indicated to be adjusted according to the parameter adjustment policy. The signal transmission apparatus further adjusts the matching parameter of the signal transmission apparatus through the central control module. For example, the central control module is separately communicatively connected to the first interface and the first channel, the central control module is communicatively connected to the signal processing module, and the signal processing module indicates to adjust the matching parameter of the signal transmission apparatus according to the parameter adjustment policy, and sends the parameter adjustment policy to the central control module; and the central control module adjusts at least one of an interface parameter of the first interface and a drive parameter of the first channel according to the parameter adjustment policy. Optionally, the process of adjusting the matching parameter through the central control module is similar to the process of adjusting the matching parameter through the central control module 14 in the foregoing embodiment. For details, refer to related descriptions. Details are not described herein again. Then, the signal transmission apparatus determines a new transmission indicator based on the signal transmitted by the first interface and the first channel after the matching parameter is adjusted, and determines the parameter adjustment policy based on the new transmission indicator until the parameter adjustment policy indicates that the matching parameter does not need to be adjusted. Therefore, the signal transmission apparatus determines that commissioning ends, and the signal transmission apparatus may start signal transmission.

In conclusion, according to the signal transmission apparatus commissioning method provided in this embodiment of this application, the parameter adjustment policy is automatically determined based on sending of the initial signal, to determine whether the matching parameter of the signal transmission apparatus needs to be adjusted, and manage commissioning of the signal transmission apparatus. Commissioning of the signal transmission apparatus is a fully automated operation, so that commissioning time of the signal transmission apparatus is reduced. Commissioning is performed after the signal transmission apparatus is powered on and before the signal is transmitted, the signal transmission apparatus after commissioning ends may be directly applied to signal transmission, and commissioning efficiency is high.

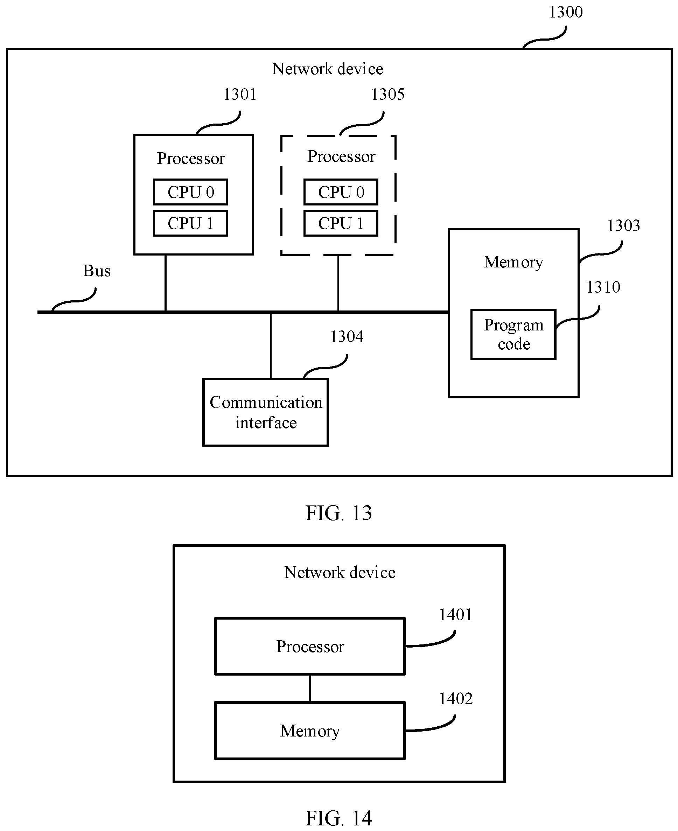

FIG. 13 is a diagram of a structure of a network device 1300 according to an example embodiment of this application. The network device 1300 shown in FIG. 13 includes a signal transmission apparatus, configured to perform operations related to the signal transmission apparatus commissioning method shown in FIG. 11. The network device 1300 is, for example, a switch or a router. The network device 1300 may be implemented by using a general bus architecture.

As shown in FIG. 13, the network device 1300 includes at least one processor 1301, a memory 1303, and at least one communication interface 1304.

The processor 1301 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 1301 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The processor may implement or execute various logical blocks, modules, and circuits described with reference to content disclosed in embodiments of the present invention. Alternatively, the processor may be a combination implementing a computing function, for example, a combination including one or more microprocessors, or a combination of the DSP and the microprocessor.

Optionally, the network device 1300 further includes a bus. The bus is configured to transmit information between components of the network device 1300. The bus may be a peripheral component interconnect (peripheral component interconnect, PCI) bus or an extended industry standard architecture (extended industry standard architecture, EISA) bus, or the like. Buses may be classified into an address bus, a data bus, a control bus, and the like. For ease of representation, only one bold line represents the bus in FIG. 13, but this does not mean that there is only one bus or only one type of bus.

The memory 1303 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only memory, EEPROM), a compact disc read-only memory (compact disc read-only memory, CD-ROM) or another compact disc storage, an optical disk storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer, but is not limited thereto. For example, the memory 1303 exists independently, and is connected to the processor 1301 through the bus. Alternatively, the memory 1303 may be integrated with the processor 1301.

The communication interface 1304 is configured to communicate with another device or a communication network through any apparatus such as a transceiver. The communication network may be an ethernet, a radio access network (RAN), a wireless local area network (wireless local area network, WLAN), or the like. The communication interface 1304 may include a wired communication interface, and may further include a wireless communication interface. Specifically, the communication interface 1304 may be an ethernet (ethernet) interface, a fast ethernet (fast ethernet, FE) interface, a gigabit ethernet (gigabit ethernet, GE) interface, an asynchronous transfer mode (asynchronous transfer mode, ATM) interface, a wireless local area network (wireless local area network, WLAN) interface, a cellular network communication interface, or a combination thereof. The ethernet interface may be an optical interface, an electrical interface, or a combination thereof. In this embodiment of this application, the communication interface 1304 may be used by the network device 1300 to communicate with another device.

During specific implementation, in an embodiment, the processor 1301 may include one or more CPUs, for example, a CPU 0 and a CPU 1 shown in FIG. 13. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the network device 1300 may include a plurality of processors, for example, the processor 1301 and a processor 1305 shown in FIG. 13. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the network device 1300 may further include an output device and an input device. The output device communicates with the processor 1301, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 1301, and may receive an input of a user in a plurality of manners. For example, the input device may be a mouse, a keyboard, a touchscreen device, or a sensing device.

In some embodiments, the memory 1303 is configured to store program code 1310 for executing the solutions of this application, and the processor 1301 may execute the program code 1310 stored in the memory 1303. The program code 1310 may include one or more software modules. Optionally, the processor 1301 may also store program code or instructions for executing the solutions of this application.

Steps performed by the signal transmission apparatus in the signal transmission apparatus commissioning method shown in FIG. 11 are completed through an integrated logic circuit in the signal transmission apparatus or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with the hardware in the processor. To avoid repetition, details are not described herein again.

FIG. 14 is a diagram of a structure of another network device according to an embodiment of this application. The network device includes a signal transmission apparatus, and the signal transmission apparatus is configured to perform operations related to the signal transmission apparatus in the signal transmission apparatus commissioning method shown in FIG. 11. For example, the network device is, for example, a server. The server may vary greatly due to different configurations or performance, and may include one or more processors 1401 and one or more memories 1402. The one or more memories 1402 store at least one computer program, and the at least one computer program is loaded and executed by the one or more processors 1401. Certainly, the network device may further have components such as a wired or wireless network interface, a keyboard, and an input/output interface, to perform input/output. The network device may further include another component configured to implement a function of the device. Details are not described herein.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is enabled to perform the signal transmission apparatus commissioning method.

It should be understood that the foregoing processor may be a central processing unit (Central Processing Unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computing machines (advanced RISC machines, ARM) architecture.

Further, in an optional embodiment, the memory may include a read-only memory and a random access memory, and provide instructions and data for the processor. The memory may further include a nonvolatile random access memory. For example, the memory may further store information of a device type.

The memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a signal transmission apparatus commissioning device is provided. The device includes a processor, and the processor is configured to load and run at least one instruction, so that the signal transmission apparatus commissioning device implements the signal transmission apparatus commissioning method provided in embodiments of this application. Optionally, the device further includes a memory, and the memory is configured to store the at least one instruction.

An embodiment of this application further provides a computer-readable storage medium. The storage medium stores at least one instruction, and the instruction is loaded and executed by a processor, to enable a computer to implement any signal transmission apparatus commissioning method above.

An embodiment of this application further provides a computer program (product). When the computer program (product) is executed by a computer, a processor or the computer is enabled to perform corresponding steps and/or procedures in the foregoing method embodiments.

An embodiment of this application further provides a chip. The chip includes a processor, configured to invoke instructions from a memory and run the instructions stored in the memory, so that a communication device on which the chip is installed to perform any signal transmission apparatus commissioning method above.

An embodiment of this application further provides another chip. The chip includes an input interface, an output interface, a processor, and a memory. The input interface, the output interface, the processor, and the memory are connected through an internal connection path. The processor is configured to execute code in the memory. When the code is executed, the processor is configured to perform any signal transmission apparatus commissioning method above.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

To clearly describe the interchangeability of hardware and software, the steps and composition of embodiments have been usually described in the foregoing descriptions based on functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

Computer program code used to implement the method in embodiments of this application may be written in one or more programming languages. The computer program code may be provided for a processor of a general-purpose computer or a dedicated computer, so that when the program code is executed by the computer, functions/operations specified in the flowcharts and/or block diagrams are implemented. The program code may be executed all on a computer, partially on a computer, as an independent software package, partially on a computer and partially on a remote computer, or all on a remote computer or server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

It can be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into the modules is merely logical function division and there may be other division manners during actual application. For example, a plurality of modules or components may be combined or may be integrated into another system, or some features may be ignored or not performed. In addition, the displayed or discussed mutual couplings or direct couplings or communication connections may be implemented through some interfaces. Indirect couplings or communication connections between the devices or modules may be electrical connections, mechanical connections, or connections in other forms.

The modules described as separate parts may or may not be physically separate, and parts displayed as modules may or may not be physical modules, to be specific, may be located at one position, or may be distributed on a plurality of network modules. Some or all of the modules may be selected based on actual requirements to implement the objectives of the solutions in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

It should be noted that information (including but not limited to user equipment information, personal information of a user, and the like), data (including but not limited to data used for analysis, stored data, displayed data, and the like), and signals in this application are used under authorization by the user or full authorization by all parties, and capturing, use, and processing of related data need to conform to related laws, regulations, and standards of related countries and regions. For example, the first modulated signal and the like in this application are obtained under full authorization.

The terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should be further understood that although the following descriptions use terms such as "first" and "second" to describe various elements, these elements should not be limited by the terms. These terms are simply used to distinguish one element from another. For example, without departing from the scope of the various examples, a first matching result may be referred to as a second matching result, and similarly, a second matching result may be referred to as a first matching result.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and the term "a plurality of" in this application means two or more. For example, a plurality of second packets means two or more second packets. The terms "system" and "network" are often used interchangeably herein.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should further be understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should be further understood that, according to the context, the phrase "if it is determined..." or "if [a stated condition or event] is detected" may be interpreted to mean "when it is determined that..." or "in response to determining ..." or "when [a stated condition or event] is detected" or "in response to detecting [a stated condition or event]".

It should be understood that determining B based on A does not mean that B is determined based only on A, and B may alternatively be determined based on A and/or other information.

It should be further understood that "one embodiment", "an embodiment", or "a possible implementation" mentioned throughout this specification means that particular features, structures, or characteristics related to embodiments or implementations are included in at least one embodiment of this application. Therefore, "in one embodiment", "in an embodiment", or "in a possible implementation" appearing throughout this specification does not necessarily mean a same embodiment. In addition, these particular features, structures, or characteristics may be combined in one or more embodiments in any appropriate manner.

## Claims

1. A signal transmission apparatus, comprising a service processing module, a signal processing module, and an optical module, wherein the service processing module comprises a first interface, the optical module comprises a first channel, the signal processing module is separately communicatively connected to the first interface and the first channel, and the first interface is communicatively connected to the first channel;
the first interface is configured to send an initial signal to the first channel;
the first channel is configured to obtain a first modulated signal based on the initial signal, and transmit the first modulated signal; and
the signal processing module is configured to determine a parameter adjustment policy based on a transmission status corresponding to the first modulated signal, wherein the parameter adjustment policy is used to adjust a matching parameter of the signal transmission apparatus, and the matching parameter is used to determine matching between the first interface and the first channel.

2. The signal transmission apparatus according to claim **1,** wherein the signal processing module is configured to obtain a transmission indicator corresponding to the first modulated signal, and determine the parameter adjustment policy based on the transmission indicator, wherein the transmission indicator is determined based on the transmission status corresponding to the first modulated signal.

3. The signal transmission apparatus according to claim 2, wherein the service processing module further comprises a second interface, the optical module further comprises a second channel, the second interface is communicatively connected to the second channel, the signal processing module is separately communicatively connected to the second interface and the second channel, and the second channel is communicatively connected to the first channel;
the first channel is configured to transmit the first modulated signal to the second channel;
the second channel is configured to obtain a second modulated signal based on the first modulated signal, and transmit the second modulated signal to the second interface;
the second interface is configured to obtain a signal feature of the second modulated signal, wherein the signal feature of the second modulated signal indicates the transmission status corresponding to the first modulated signal; and
the signal processing module is configured to obtain the transmission indicator that is obtained based on the signal feature of the second modulated signal.

4. The signal transmission apparatus according to claim 3, wherein the first channel and the second channel are connected through an optical fiber.

5. The signal transmission apparatus according to claim 3, wherein the optical module further comprises an optical splitting module, and the optical splitting module is separately communicatively connected to the first channel and the second channel;
the first channel is configured to transmit the first modulated signal to the optical splitting module; and
the optical splitting module is configured to transmit the first modulated signal to the second channel.

6. The signal transmission apparatus according to any one of claims 3 to 5, wherein the second interface is further configured to send the signal feature of the second modulated signal to the signal processing module; and
the signal processing module is configured to determine the transmission indicator based on the signal feature of the second modulated signal, an initial parameter of the second channel, and an initial parameter of the second interface.

7. The signal transmission apparatus according to claim 2, wherein the first channel is communicatively connected to an indicator calculation module, and the indicator calculation module is communicatively connected to the signal processing module;
the first channel is configured to transmit the first modulated signal to the indicator calculation module;
the indicator calculation module is configured to determine the transmission indicator based on the received first modulated signal, and transmit the transmission indicator to the signal processing module; and
the signal processing module is configured to receive the transmission indicator sent by the indicator calculation module.

8. The signal transmission apparatus according to claim 2, wherein the first channel is communicatively connected to a third channel comprised in a reference apparatus, and the third channel is communicatively connected to a reference processing module comprised in the reference apparatus;
the first channel is configured to send the first modulated signal to the third channel;
the third channel is configured to obtain a third modulated signal based on the first modulated signal, and send the third modulated signal to the reference processing module;
the reference processing module is configured to determine the transmission indicator based on the third modulated signal, and send the transmission indicator to the signal processing module; and
the signal processing module is configured to receive the transmission indicator sent by the reference processing module.

9. The signal transmission apparatus according to any one of claims 2 to 8, wherein the signal processing module is configured to determine, based on mismatching between the transmission indicator and a transmission protocol corresponding to the signal transmission apparatus, that the parameter adjustment policy indicates to adjust the matching parameter of the signal transmission apparatus.

10. The signal transmission apparatus according to any one of claims 1 to 9, wherein the signal transmission apparatus further comprises a central control module, the central control module is separately communicatively connected to the first interface and the first channel, and the central control module is communicatively connected to the signal processing module;
the signal processing module is further configured to indicate to adjust the matching parameter of the signal transmission apparatus according to the parameter adjustment policy, and send the parameter adjustment policy to the central control module; and
the central control module is configured to adjust at least one of an interface parameter of the first interface and a drive parameter of the first channel according to the parameter adjustment policy.

11. The signal transmission apparatus according to claim 10, wherein the signal processing module and the central control module are configured on a central control chip of the signal transmission apparatus.

12. The signal transmission apparatus according to any one of claims 1 to 10, wherein the signal processing module and the service processing module are configured on a cross chip of the signal transmission apparatus.

13. The signal transmission apparatus according to any one of claims 1 to 12, wherein the initial signal is a signal sent based on a test optical eye pattern.

14. The signal transmission apparatus according to any one of claims 1 to 13, wherein the optical module is a module inserted into the signal transmission apparatus.

15. The signal transmission apparatus according to any one of claims 1 to 14, wherein the first interface comprises a serializer deserializer-transmit SERDES-T interface.

16. The signal transmission apparatus according to any one of claims 3 to 6, wherein the second interface comprises a serializer deserializer-receive SERDES-R interface.

17. A signal transmission apparatus commissioning method, wherein the method is applied to a signal transmission apparatus, the signal transmission apparatus comprises a service processing module, a signal processing module, and an optical module, the service processing module comprises a first interface, the optical module comprises a first channel, the signal processing module is separately communicatively connected to the first interface and the first channel, and the first interface is communicatively connected to the first channel; and the method comprises:
sending an initial signal to the first channel through the first interface;
obtaining a first modulated signal through the first channel based on the initial signal, and transmitting the first modulated signal; and
determining a parameter adjustment policy through the signal processing module based on a transmission status corresponding to the first modulated signal, wherein the parameter adjustment policy is used to adjust a matching parameter of the signal transmission apparatus, and the matching parameter is used to determine matching between the first interface and the first channel.

18. The method according to claim 17, wherein determining the parameter adjustment policy through the signal processing module based on the transmission status corresponding to the first modulated signal comprises:
obtaining, through the signal processing module, a transmission indicator corresponding to the first modulated signal, and determining the parameter adjustment policy based on the transmission indicator, wherein the transmission indicator is determined based on the transmission status corresponding to the first modulated signal.

19. The method according to claim 18, wherein the service processing module further comprises a second interface, the optical module further comprises a second channel, the second interface is communicatively connected to the second channel, the signal processing module is separately communicatively connected to the second interface and the second channel, and the second channel is communicatively connected to the first channel;
transmitting the first modulated signal comprises:
transmitting the first modulated signal to the second channel; and
obtaining, through the signal processing module, the transmission indicator corresponding to the first modulated signal comprises:
obtaining a second modulated signal through the second channel based on the first modulated signal, and transmitting the second modulated signal to the second interface;
obtaining a signal feature of the second modulated signal through the second interface, wherein the signal feature of the second modulated signal indicates the transmission status corresponding to the first modulated signal; and
obtaining, through the signal processing module, the transmission indicator that is obtained based on the signal feature of the second modulated signal.

20. The method according to claim 19, wherein the first channel and the second channel are connected through an optical fiber.

21. The method according to claim 19, wherein the optical module further comprises an optical splitting module, and the optical splitting module is separately communicatively connected to the first channel and the second channel; and
transmitting the first modulated signal to the second channel comprises:
transmitting the first modulated signal to the optical splitting module; and
transmitting the first modulated signal to the second channel through the optical splitting module.

22. The method according to any one of claims 19 to 21, wherein after obtaining the signal feature of the second modulated signal through the second interface, the method further comprises:
sending the signal feature of the second modulated signal to the signal processing module; and
obtaining, through the signal processing module, the transmission indicator that is obtained based on the signal feature of the second modulated signal comprises:
determining the transmission indicator through the signal processing module based on the signal feature of the second modulated signal, an initial parameter of the second channel, and an initial parameter of the second interface.

23. The method according to claim 18, wherein the first channel is communicatively connected to an indicator calculation module, and the indicator calculation module is communicatively connected to the signal processing module;
transmitting the first modulated signal comprises:
transmitting the first modulated signal to the indicator calculation module, wherein the indicator calculation module is configured to determine the transmission indicator based on the received first modulated signal, and transmit the transmission indicator to the signal processing module; and
obtaining, through the signal processing module, the transmission indicator corresponding to the first modulated signal comprises:
receiving, through the signal processing module, the transmission indicator sent by the indicator calculation module.

24. The method according to claim 18, wherein the first channel is communicatively connected to a third channel comprised in a reference apparatus, and the third channel is communicatively connected to a reference processing module comprised in the reference apparatus;
transmitting the first modulated signal comprises:
sending the first modulated signal to the third channel, wherein the third channel is configured to obtain a third modulated signal based on the first modulated signal, and send the third modulated signal to the reference processing module, and the reference processing module is configured to determine the transmission indicator based on the third modulated signal, and send the transmission indicator to the signal processing module; and
obtaining, through the signal processing module, the transmission indicator corresponding to the first modulated signal comprises:
receiving, through the signal processing module, the transmission indicator sent by the reference processing module.

25. The method according to any one of claims 18 to 24, wherein determining the parameter adjustment policy based on the transmission indicator comprises:
determining, based on mismatching between the transmission indicator and a transmission protocol corresponding to the signal transmission apparatus, that the parameter adjustment policy indicates to adjust the matching parameter of the signal transmission apparatus.

26. The method according to any one of claims 17 to 25, wherein the signal transmission apparatus further comprises a central control module, the central control module is separately communicatively connected to the first interface and the first channel, and the central control module is communicatively connected to the signal processing module; and
after determining the parameter adjustment policy based on the transmission status corresponding to the first modulated signal, the method further comprises:
indicating to adjust the matching parameter of the signal transmission apparatus through the signal processing module based on the parameter adjustment policy, and sending the parameter adjustment policy to the central control module; and
adjusting at least one of an interface parameter of the first interface and a drive parameter of the first channel through the central control module according to the parameter adjustment policy.

27. The method according to claim 26, wherein the signal processing module and the central control module are configured on a central control chip of the signal transmission apparatus.

28. The method according to any one of claims 17 to 26, wherein the signal processing module and the service processing module are configured on a cross chip of the signal transmission apparatus.

29. The method according to any one of claims 17 to 28, wherein the initial signal is a signal sent based on a test optical eye pattern.

30. The method according to any one of claims 17 to 29, wherein the optical module is a module inserted into the signal transmission apparatus.

31. The method according to any one of claims 17 to 30, wherein the first interface comprises a serializer deserializer-transmit SERDES-T interface.

32. The method according to any one of claims 19 to 22, wherein the second interface comprises a serializer deserializer-receive SERDES-R interface.

33. A signal transmission apparatus commissioning device, wherein the device comprises a processor, and the processor loads and executes at least one instruction, so that the signal transmission apparatus commissioning device implements the signal transmission apparatus commissioning method according to any one of claims 17 to 32.

34. The signal transmission apparatus commissioning device according to claim 33, wherein the device comprises a memory, the memory is coupled to the processor, and the memory stores at least one instruction.

35. A computer-readable storage medium, wherein the computer-readable storage medium stores at least one instruction, and the instruction is loaded and executed by a processor, to implement the signal transmission apparatus commissioning method according to any one of claims 17 to 32.
